# FASCICULE DE BREVET EUROPEEN

(11) **EP 2 142 316 B1**
(45) Date de publication et mention de la délivrance du brevet: **28.07.2010**
(21) Numéro de dépôt: 08735658.0
(22) Date de dépôt: 01.04.2008
(51) Int. Cl.: B08B 9/08, A01J 7/02

(54) **ENCEINTE DE LAVAGE DU NEZ DE VIDANGE D'UNE CUVE DE STOCKAGE ET DE REFROISISSEMENT DE LAIT**
KAMMER ZUM WASCHEN DES AUSGIESSABLAUFS EINES MILCHLAGERUNGS- UND -KÜHLBEHÄLTERS
CHAMBER FOR WASHING THE DRAIN SPOUT OF A MILK STORAGE AND COOLING TANK

(30) Priorité: 20.04.2007 FR 0702875
(43) Date de publication de la demande: 13.01.2010
(73) Titulaire: Serap Industries, Route de Fougères 53120 Gorron (FR)
(72) Inventeur: GUESDON, Serge, F-35420 Louvigne Du Desert (FR)
(74) Mandataire: Bomer, Françoise Marie
(86) Numéro de dépôt international: PCT/EP2008/053887
(87) Numéro de publication internationale: WO 2008/135323

(56) Documents cités:
- FR-A- 2 815 892
- FR-A- 2 844 731

## Description

La présente invention concerne une enceinte de lavage du nez de vidange d'une cuve de stockage et de refroidissement de lait.

Dans leur exploitation les producteurs de lait disposent d'une cuve réfrigérée, usuellement appelée « tank à lait », dans laquelle ils stockent le lait issu des traites.

Ce genre de cuve est généralement muni, en partie basse, d'un petit conduit, appelé « nez de vidange », par lequel le lait stocké et refroidi contenu dans la cuve peut être prélevé, par exemple quotidiennement, pour être transféré dans un camion citerne assurant la collecte. Le nez de vidange est équipé, côté cuve, d'une vanne susceptible d'être ouverte ou fermée ; son extrémité libre est conformée en embout de raccordement adapté pour pouvoir être connecté, de manière étanche aux liquides, au tuyau de pompage équipant le camion citerne assurant la collecte.

Le transfert du lait dans la citerne du camion est réalisé après branchement du tuyau de pompage sur cet embout de raccordement et, bien sûr, ouverture de la vanne, afin d'autoriser le vidage de la cuve.

Ce branchement se fait avantageusement au moyen d'un raccord rapide, par exemple du genre décrit dans le document FR 2 835 586.

Lorsque la cuve a été vidée, elle doit être nettoyée, avant de recevoir une nouvelle quantité de lait.

A cet effet, la cuve est équipée d'un équipement de lavage et de rinçage de sa paroi interne ainsi que des différents organes et conduits qui ont été en contact avec le lait, par circulation de liquides de lavage et de rinçage appropriés, de manière à respecter la réglementation sanitaire.

Le nez de vidange doit également être lavé et rincé.

Pour cela, il est connu de coiffer le nez de vidange, au-delà de la vanne, d'une enceinte munie d'un conduit de sortie, dans laquelle les liquides de lavage, puis de rinçage peuvent circuler en circuit fermé durant les cycles successifs de lavage et de rinçage, lesquels sont mis en oeuvre de manière automatique à partir d'une armoire de commande.

Ainsi, le nez de vidange, y compris son embout de raccordement au tuyau de pompage, est nettoyé au cours de ces cycles car il est entouré par le liquide en circulation.

A la fin de chaque cycle, l'évacuation du liquide ayant servi au lavage et, respectivement, au rinçage, s'opère via cette enceinte, par le conduit de sortie dont elle est munie, lequel se trouve au « point bas » de la cuve et de l'installation, de sorte que le risque de stagnation d'une fraction du liquide de rinçage se trouve éliminé.

L'état de la technique en la matière peut être illustré par les documents FR 2 815 892 et FR 2 844 731.

Le premier, au nom de la demanderesse, se rapporte à un équipement du genre indiqué, dont l'enceinte est constituée d'une partie fixe, montée à demeure sur le nez de vidange (entre la vanne et l'embout) et d'une enveloppe amovible. Celle-ci est enlevée seulement lors de l'opération de collecte du lait.

L'enveloppe est pourvue d'un purgeur, positionné en partie haute, dont la fonction est d'autoriser l'évacuation de l'air contenu dans le liquide de lavage ou de rinçage, ce qui prévient la formation d'une poche d'air qui risquerait d'empêcher le liquide d'atteindre le dessus du raccord.

Le second a pour objet un dispositif similaire, mais dont l'enceinte consiste en un boîtier comprenant un élément de fond, monté à demeure sur le nez de vidange, et un élément de couvercle, qui porte le conduit de sortie et est articulé autour d'un axe vertical sur l'élément de fond.

Ces dispositifs connus donnent globalement satisfaction.

Il peut néanmoins arriver que des résidus laiteux restent présents, sous forme d'une fine couche grasse adhérant au nez de vidange, essentiellement au niveau de la zone supérieure de son embout de raccordement, à l'issue des cycles de lavage rinçage.

La présente invention vise à résoudre ce problème en proposant une enceinte de lavage du nez de vidange du genre exposé ci-dessus qui améliore la qualité du lavage, en diminuant notablement le risque que des résidus graisseux subsistent sur le nez de vidange à l'issue des cycles de lavage et de rinçage.

L'enceinte de lavage qui fait l'objet de l'invention est donc destinée au lavage et au rinçage du nez de vidange d'une cuve de stockage et de refroidissement de lait, ce nez étant équipé, du côté de la cuve, d'une vanne, tandis qu'il présente, à son extrémité libre, un embout de raccordement apte à être connecté à un tuyau de pompage du lait, cette enceinte comprenant un élément fixe montable à demeure sur le nez entre la vanne et l'embout de raccordement, et un élément mobile en forme de coquille présentant une cavité intérieure et une embouchure, cet élément mobile étant adapté pour être accolé et solidarisé au niveau de son embouchure à l'élément fixe de telle façon que sa cavité intérieure entoure l'embout de raccordement tout en ménageant autour de ce dernier un espace suffisant pour permettre le passage et la circulation d'un liquide de lavage ou de rinçage, cette enceinte étant pourvue en outre d'un conduit de sortie des liquides de lavage et de rinçage.

Conformément à l'invention, la paroi de cette cavité est munie intérieurement, dans le prolongement de l'axe du nez, ou approximativement dans le prolongement de cet axe, d'une proéminence qui constitue un organe déflecteur apte à dévier radialement vers l'extérieur le flux de liquide de lavage ou de rinçage sortant du nez afin qu'il se répartisse de manière homogène à l'intérieur de la cavité de l'élément mobile en forme de coquille, tout autour dudit embout de raccordement.

L'élément mobile peut, soit être indépendant de l'élément fixe et être solidarisé avec celui-ci, par exemple par encliquetage, avant et en vue de l'opération de lavage - rinçage, soit être relié à l'élément fixe par une liaison articulée, comme prévu notamment dans le document FR 2 844 731 précité.

Grâce à cet arrangement, il se crée dans la chambre de lavage définie par cette cavité une circulation maîtrisée et accélérée du liquide, qui vient lécher l'ensemble des surfaces des pièces situées à l'intérieur de la cavité, notamment les parois internes et externes de l'embout, ainsi que son chant d'extrémité, de sorte que le problème susmentionné se trouve résolu.

Par ailleurs, selon un certain nombre de caractéristiques additionnelles, non limitatives de l'invention:
- l'organe déflecteur possède une section droite variable, qui décroît en direction du nez ;
- l'organe déflecteur est une pièce présentant une symétrie de révolution autour d'un axe parallèle à l'axe du nez, ou confondu avec cet axe ;
- l'organe déflecteur a une forme conique, ou sensiblement conique ;
- l'élément mobile en forme de coquille présente un fond plat qui s'inscrit dans un plan perpendiculaire, ou sensiblement perpendiculaire, à l'axe du nez, et l'organe déflecteur est porté par ce fond plat ;
- l'organe déflecteur forme partie intégrante de l'élément mobile ;
- l'élément mobile en forme de coquille a un profil étagé et présente un renfoncement de paroi dont le fond est muni de l'organe déflecteur ;
- l'enceinte est conçue pour s'adapter sur un nez pourvu d'un embout de raccordement de diamètre donné, dit « de grand diamètre », et l'élément mobile en forme de coquille et à profil étagé est ainsi conformé et dimensionné qu'il peut également s'adapter sur un embout de raccordement de diamètre inférieur dont est pourvu un manchon réducteur de section fixé sur l'embout de raccordement de grand diamètre ;
- l'enceinte est pourvue d'un purgeur qui est positionné en sa partie supérieure ;
- l'élément mobile est une pièce en matière plastique moulée dont l'organe déflecteur forme partie intégrante.

D'autres caractéristiques et avantages de l'invention apparaîtront de la description qui va maintenant en être faite, en référence aux dessins annexés, sur lesquels:
La figure 1 est une vue de face, coupée par le plan vertical référencé I-I sur la figure 2, d'un premier mode de réalisation possible d'une enceinte de lavage conforme à l'invention, montée sur un nez de vidange.
La figure 2 est une vue de dessus de la même enceinte, coupée par le plan horizontal référencé II-II sur la figure 1.
La figure 3 est une vue en perspective de cette enceinte, coupée par le plan vertical I-I.
La figure 4 est une vue de face, coupée par le plan vertical référencé IV-IV sur la figure 5, d'un second mode de réalisation possible d'une enceinte de lavage conforme à l'invention, montée sur un nez de vidange.
La figure 5 est une vue de dessus de la même enceinte, coupée par le plan horizontal référencé V-V sur la figure 4.
La figure 6 est une vue en perspective de cette enceinte, coupée par un plan vertical médian.
Les figures 7 et 8 sont des vues similaires à celles des figures 4 et 5 respectivement, mais sur lesquelles le nez de vidange est équipé d'un manchon réducteur de section.

Sur les figures, la référence C désigne la paroi d'un tank refroidisseur de lait.

Celui-ci est pourvu, en partie basse, d'un petit conduit cylindrique 1 permettant son vidage, désigné nez de vidange.

Ce dernier est équipé d'une vanne V, à commande manuelle ou automatisée, susceptible d'être ouverte ou fermée afin d'autoriser ou, au contraire, d'empêcher l'échappement du liquide contenu dans le tank à lait (lait ou liquide de nettoyage) via le nez de vidange 1.

L'extrémité libre du nez 1 présente un embout 10 de raccordement, sur lequel il est possible de brancher un tuyau de pompage (non représenté), afin de vider le tank.

Entre la vanne V et cet embout 10, le nez 1 présente une collerette annulaire 11 sur laquelle est monté fixement, à demeure, un premier élément 3, constitutif d'une enceinte de lavage 2. Sa paroi de fond présente une ouverture circulaire qui s'emmanche, de façon étanche, sur la collerette 11 à laquelle elle est solidarisée, par exemple à l'aide d'un collier de serrage (non représenté).

L'enceinte 2 consiste en un boîtier qui comporte un second élément 4, en forme de coquille, complémentaire du premier élément 3 et articulé à celui-ci au moyen d'un axe d'articulation vertical 21 disposé sur l'un de ses bords latéraux. Le boîtier 2 a une configuration similaire à celle décrite dans le document FR 2 844 731 précité, auquel on pourra se reporter au besoin.

Les éléments 3 et 4 ont la forme de boîtes à paroi latérale approximativement cylindrique, ou légèrement conique, ouvertes sur une face.

L'élément fixe 3 est ouvert vers l'extérieur (par rapport au tank). L'élément articulé 4 présente une embouchure 42 circulaire, une paroi latérale 41, et un fond plat 40.

Lorsque le boîtier est ouvert, l'embouchure 42 de l'élément 4 est dirigée vers l'extérieur, tout comme celle de l'élément fixe 3.

Lorsqu'il est fermé, par pivotement à 180° de l'élément 4, l'embouchure 42 vient s'accoler de manière étanche, par l'intermédiaire d'un joint approprié 20, contre l'embouchure de l'élément 3.

Le fond 40 est alors perpendiculaire à l'axe du nez de vidange 1.

Un dispositif de verrouillage non représenté maintient le boîtier fermé.

L'élément 3 est muni latéralement d'un manchon tubulaire 30 de sortie de liquide, susceptible d'être connecté au circuit de circulation des liquides de lavage et de rinçage, ou à une évacuation.

En partie supérieure, il est pourvu d'un purgeur de gaz 5, de type connu.

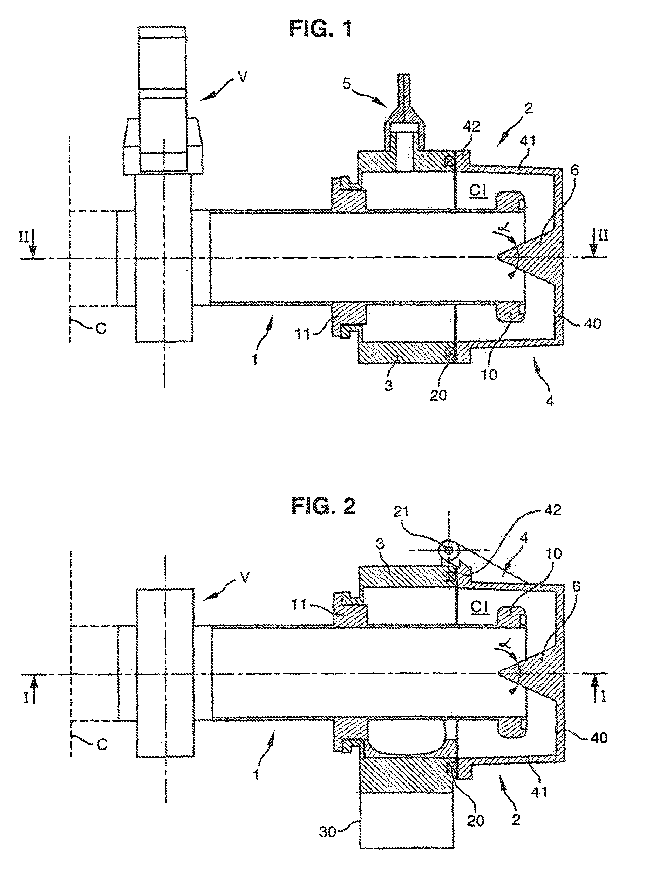

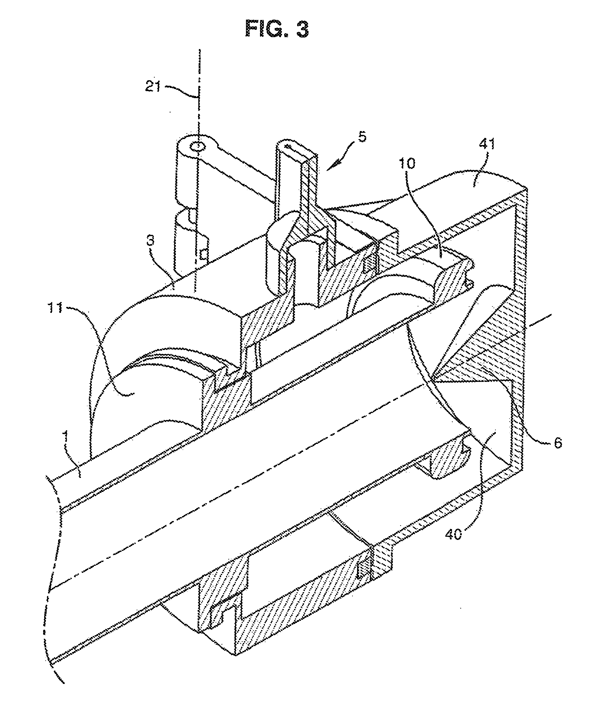

Lorsque le boîtier est fermé, dans la position illustrée sur les figures 1 à 3, il délimite une cavité CI qui entoure avec un certain jeu la portion d'extrémité aval du nez de vidange 1 située au-delà de la collerette 11.

Conformément à l'invention, cette enceinte est pourvue d'un d'une proéminence 6 qui constitue un organe déflecteur.

Cette proéminence dernier est solidaire du fond 40 de l'élément 4, et est tournée vers l'intérieur de l'enceinte (dans l'espace CI). Avantageusement l'organe déflecteur 6 forme partie intégrante du fond 40.

Dans les modes de réalisation illustrés, il a une forme conique, dont la pointe est dirigée vers l'embouchure du nez de vidange 1, et dont l'angle au sommet, référencé a sur les figures 1 et 2, a par exemple une valeur de l'ordre de 45°.

Son axe coïncide avec celui du nez de vidange 1, à l'intérieur duquel il pénètre partiellement, par sa pointe.

En utilisation, l'enceinte est normalement fermée, dans la position illustrée, de manière à protéger le nez de vidange des salissures, vanne V fermée.

Pour prélever le lait contenu dans le tank, on ouvre l'enceinte, par déverrouillage et pivotement à 180° de la coquille 4 autour de l'axe 21. On branche un tuyau de vidage sur l'embout 10, on ouvre la vanne de vidange, et on transfère le lait dans la citerne d'un camion de collecte.

Après l'opération, on débranche le tuyau, on referme l'enceinte, et on procède au lavage et au rinçage automatisés du tank et de ses équipements qui ont été en contact avec le lait. Le manchon 30 est connecté au circuit de lavage/rinçage.

Durant les cycles de lavage et de rinçage, un liquide approprié est mis en circulation, qui sort du tank par le nez 1, pénètre dans l'espace CI, et en ressort par le conduit de sortie 30.

Grâce à l'arrangement de l'invention, le flux de liquide délivré axialement par le nez de vidange vient lécher la paroi conique du déflecteur proéminent 6, se trouve divisé et refoulé radialement vers l'extérieur, contre la face interne de la paroi latérale 41 de la coquille 4. Il se crée ainsi une turbulence et une accélération du courant qui entraîne une diffusion homogène du liquide de rinçage, puis de lavage, dans l'espace périphérique du nez de vidange 1, et notamment de l'embout 10. Ce courant lèche régulièrement la totalité de la paroi du nez de vidange, y compris sa portion supérieure ; la qualité du nettoyage ainsi réalisé est encore améliorée par la présence du purgeur 5 en partie haute de l'enceinte, qui empêche la formation de poches d'air dans cette zone.

Les résidus susceptibles d'adhérer au nez de vidange, et en particulier dans la zone supérieure de l'embout de raccordement 10, se trouvent éliminés de manière efficace.

A la fin de l'opération de rinçage, la totalité du liquide est évacuée par le conduit 30, qui se trouve au « point bas » de l'enceinte, afin d'éviter qu'une certaine quantité de liquide n'y reste inopinément prisonnière.

La vanne V est ensuite fermée, et le tank est prêt à recevoir une autre quantité de lait, correspondant à une ou plusieurs nouvelles séances de traite.

Certaines entreprises de collecte de lait utilisent des tuyaux de pompage de diamètres différents, et corrélativement dotés de raccords de diamètres différents.

En conséquence, les fabricants de tanks à lait sont tenus de proposer à la vente des tanks pourvus de nez de vidange de diamètres différents, adaptés aux diamètres de ces tuyaux.

En pratique, il existe essentiellement deux standards de raccords, l'un de diamètre appelé « trois pouces », correspondant à 76,2 ou 80 mm (en fonction de la norme du filetage) - dit grand diamètre -, l'autre de diamètre appelé « deux pouces », correspondant à 50,8 ou 55 mm - dit petit diamètre -.

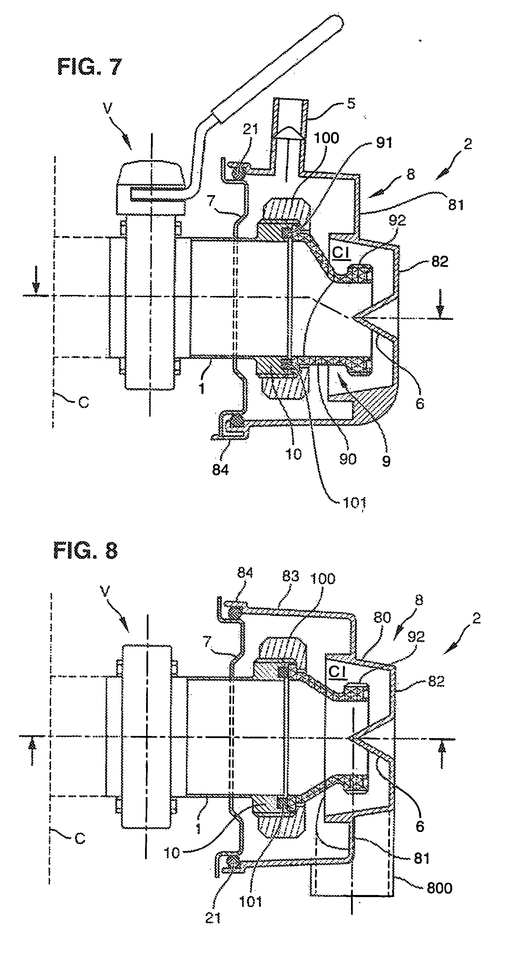

Sur les figures 7 et 8 est représenté un dispositif de nez de vidange utilisant un manchon réducteur de section.

Le tank est muni à l'origine d'un nez de vidange à embout de raccordement de grand diamètre, utilisable tel quel lorsque l'on a affaire à un tuyau de collecte également de grand diamètre.

Cependant, il est possible de monter sur ce nez un accessoire, qui consiste en un manchon réducteur de section, de sorte qu'il devient alors également compatible avec un tuyau de collecte de petit diamètre.

A cet effet, ledit manchon réducteur de section comporte :
- du côté tourné vers la cuve, une portion d'extrémité de grand diamètre, apte à être accolée et solidarisée de façon étanche avec l'embout du nez de vidange, par exemple au moyen d'une bague vissée ;
- du côté opposé, une portion d'extrémité de petit diamètre, munie d'un embout de raccordement adapté à un tuyau de pompage de petit diamètre.

Comme on le constate à l'observation des figures 7 et 8, ce manchon (référencé 9) est ainsi conformé que l'axe longitudinal et horizontal de son extrémité de petit diamètre est décalé vers le bas par rapport à l'axe longitudinal et horizontal de son extrémité de grand diamètre, ces deux axes étant néanmoins situés dans un même plan vertical.

Le manchon 9 a la forme générale d'un entonnoir qui ne possède pas une forme de révolution.

Sa génératrice inférieure est horizontale, et se trouve dans le prolongement de la génératrice inférieure du conduit 1 de nez de vidange, afin d'éviter la présence de tout « point bas » en amont de son embouchure de sortie.

Sa génératrice inférieure est fortement inclinée vers le bas et vers l'aval (voir figure 7).

Vues de dessus, ses génératrices latérales convergent symétriquement vers l'aval (voir figure 8).

Grâce à cet arrangement, le fabricant de tanks à lait peut offrir à la vente uniquement des tanks à lait pourvus d'un nez de lavage de grand diamètre, en proposant additionnellement, en option, un accessoire réducteur de section, ce qui réduit globalement les coûts de fabrication et de gestion des tanks.

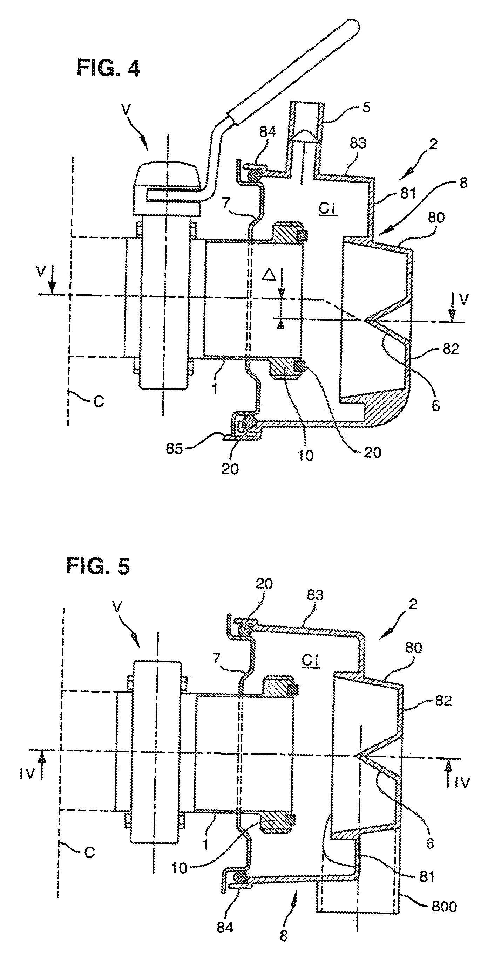

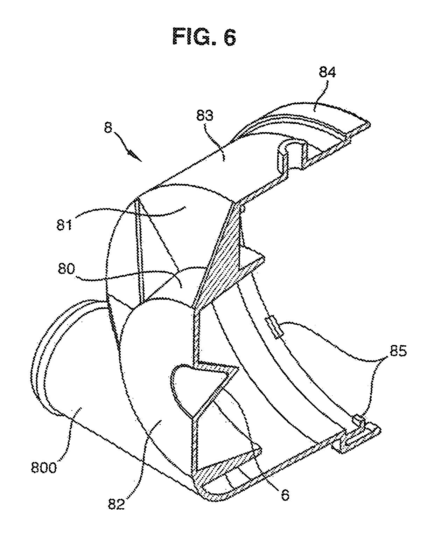

Le mode de réalisation de l'invention illustrée sur les figures 4 à 8 concerne une enceinte de lavage polyvalente, dont la conformation permette son adaptation sur un nez de vidange de « grand diamètre », que celui-ci soit ou non pourvu d'un manchon réducteur de section.

Sur ces figures, on a fait usage des mêmes chiffres et lettres de référence pour désigner des éléments identiques ou similaires à ceux qui sont représentés sur les figures 1 à 3 précédemment décrites.

Sur les figures 4 et 5, le nez de vidange 1, de grand diamètre, est dépourvu de manchon réducteur de section.

L'enceinte de lavage 2 est ici composée d'un élément fixe 7 approximativement en forme de disque, et d'un élément amovible 8, en forme de coquille.

L'élément discoïde 7 est monté fixement, par exemple soudé, de manière étanche, autour du nez 1, entre la vanne V et l'embout de raccordement 10. Il s'inscrit globalement dans un plan perpendiculaire à l'axe longitudinal du nez 1.

L'embout 10 est fileté extérieurement.

L'élément 8 a la forme générale d'une coquille dont la paroi est étagée. Il comprend une paroi annulaire de grand diamètre 83, approximativement cylindrique ou légèrement conique, dont l'embouchure 84 est adaptée pour être clipsée par un crantage approprié 85 à la périphérie de l'élément 7, ceci avec interposition d'un joint d'étanchéité annulaire 20.

La paroi 83 est munie, en partie haute, d'un purgeur 5.

Vers l'aval, cette paroi 83 se raccorde à une paroi intermédiaire 81, sensiblement plane, perpendiculaire à l'axe longitudinal du nez 1.

Ce fond 81 présente une partie 80 en forme de cuvette, sensiblement tronconique, à fond plat 82, également perpendiculaire à l'axe longitudinal du nez 1, mais dont le centre est légèrement décalé vers le bas par rapport à cet axe, d'une distance référencée Δ sur la figure 4.

La zone centrale de ce fond 82 est conformée en cône 6 qui fait office d'organe déflecteur.

Le conduit de sortie 800 se raccorde à la partie basse de la coquille 8.

Au cours des cycles de lavage et de rinçage, bien que la pointe du cône déflecteur 6 ne soit pas strictement dans l'alignement du nez de vidange 1 et qu'il en soit relativement éloigné, le flux de liquide projeté par ce nez de vidange est scindé par le cône 6 qu'il vient heurter, et est mis en turbulence dans la cavité Cl de la coquille 8, d'abord à l'intérieur même de la cuvette 80, puis plus en amont autour de l'embout 10, avec le même effet que celui expliqué précédemment en référence au premier mode de réalisation.

En référence aux figures 7 et 8, on voit que le manchon 9 dont il a été fait état plus haut comprend une portion principale 90, en forme d'entonnoir asymétrique, une embouchure amont dotée d'un rebord annulaire 91, et un embout de raccordement de petit diamètre 92.

Il est monté à l'extrémité du nez de vidange 1 au moyen d'une bague taraudée 100, qui est vissée sur l'embout fileté 10 de manière à emprisonner le rebord 91 tout en l'appliquant avec un certain degré de serrage contre le chant d'extrémité de l'embout 10.

Ce serrage est réalisé avec interposition d'un joint d'étanchéité 101 qui est logée dans une gorge annulaire creusée dans ce chant.

Au cours du montage de l'accessoire réducteur de section sur le nez de vidage, l'opérateur doit bien entendu veiller à ce que cet accessoire occupe bien l'orientation illustrée sur les figures 7 et 8, afin d'éviter l'existence d'un « point haut » en amont de l'embout 92. Des organes détrompeurs idoines peuvent du reste être prévus pour éviter tout risque de montage incorrect.

Les dimensions et configurations respectives de l'élément en forme de coquille 8 et du manchon 9 sont telles que le cône déflecteur 6 s'engage coaxialement et partiellement, par sa pointe, à l'intérieur de l'embout 92.

La circulation des liquides de lavage et de rinçage, après déflection, se fait ici essentiellement à l'intérieur de la partie 80 en forme de cuvette, de volume réduit, et est confinée autour de l'embout de raccordement 92, ce qui donne des résultats particulièrement efficaces quant à la qualité de nettoyage et de désinfection du manchon connecteur 9 et de son embout 92.

L'organe déflecteur n'a pas nécessairement une forme conique.

Diverses autres formes peuvent être envisagées, telles que par exemple : une forme tronconique, pyramidale, en tronc de pyramide, en ogive, ou hémisphérique.

L'important est que la proéminence constitutive de l'organe déflecteur soit ainsi conformée et positionnée en regard de l'embouchure de sortie du nez de vidange, ou du manchon réducteur monté sur le nez de vidange, qu'elle dévie le flux liquide qui s'en échappe axialement hors de celui-ci afin de créer dans l'espace intérieur de l'enceinte un courant turbulent, voire tourbillonnaire, relativement homogène et convenablement réparti tout autour de l'embout de raccordement afin d'en lécher toutes les zones.

Les éléments constitutifs de l'enceinte peuvent être réalisés en métal et/ou en matière plastique, par exemple moulée.

L'organe déflecteur peut être une pièce rapportée ou formant partie intégrante de la paroi de l'enceinte, par exemple venant de moulage avec l'élément mobile en forme de coquille, si celui-ci est réalisé en matière plastique moulée.

## Revendications

1. Enceinte de lavage du nez de vidange d'une cuve de stockage et de refroidissement de lait, ce nez (1) étant équipé, du côté de la cuve (C), d'une vanne (V) et présentant, à son extrémité libre, un embout de raccordement (10) apte à être connecté à un tuyau de pompage du lait, cette enceinte (2) comprenant un élément fixe (3 ; 7), montable à demeure sur le nez (1) entre la vanne (V) et l'embout de raccordement (10), et un élément mobile (4 ; 8) en forme de coquille présentant une cavité intérieure (CI) et une embouchure (42 ; 84), cet élément mobile étant adapté pour être accolé et solidarisé au niveau de son embouchure (42 ; 84) à l'élément fixe (3 ; 7), de telle façon que sa cavité intérieure entoure l'embout de raccordement (10), tout en ménageant autour de ce dernier un espace suffisant pour permettre le passage et la circulation d'un liquide de lavage ou de rinçage, cette enceinte étant pourvue en outre d'un conduit de sortie de ce liquide (30 ; 800), **caractérisée par le fait que** la paroi de cette cavité est munie intérieurement, dans le prolongement de l'axe du nez (1), ou approximativement dans le prolongement de cet axe, d'une proéminence qui constitue un organe déflecteur (6) apte à dévier radialement vers l'extérieur le flux de liquide de lavage ou de rinçage sortant du nez (1) afin qu'il se répartisse de manière homogène à l'intérieur de la cavité (CI) de l'élément mobile (4 ; 8) en forme de coquille, tout autour dudit embout de raccordement (10).

2. Enceinte de lavage selon la revendication 1, **caractérisée par le fait que** ledit organe déflecteur (6) possède une section droite variable, qui décroît en direction du nez (1).

3. Enceinte de lavage selon la revendication 1 ou 2, **caractérisée par le fait que** ledit organe déflecteur (6) est une pièce présentant une symétrie de révolution autour d'un axe parallèle à l'axe du nez (1), ou confondu avec cet axe.

4. Enceinte de lavage selon l'une quelconque des revendications 1 à 3, **caractérisée par le fait que** ledit organe déflecteur (6) a une forme conique, ou sensiblement conique.

5. Enceinte de lavage selon l'une quelconque des revendications 1 à 4, **caractérisée par le fait que** ledit élément mobile (4 ; 8) en forme de coquille présente un fond plat (40 ; 82) qui s'inscrit dans un plan perpendiculaire, ou sensiblement perpendiculaire, à l'axe du nez (1), et que ledit organe déflecteur (6) est porté par ce fond plat (40 ; 82).

6. Enceinte de lavage selon l'une quelconque des revendications 1 à 5, **caractérisée par le fait que** l'organe déflecteur (6) forme partie intégrante dudit élément mobile (4 ; 8).

7. Enceinte de lavage selon l'une quelconque des revendications 1 à 6, **caractérisée par le fait que** ledit élément mobile (8) en forme de coquille a un profil étagé et présente un renfoncement de paroi (81) dont le fond (82) est muni dudit organe déflecteur (6).

8. Enceinte de lavage selon la revendication 7, adaptable sur un nez (1) pourvu d'un embout de raccordement (10) de diamètre donné, dit « de grand diamètre » **caractérisée par le fait que** ledit élément mobile (8) en forme de coquille et à profil étagé est ainsi conformé et dimensionné qu'il peut également s'adapter sur un embout de raccordement (92) de diamètre inférieur dont est pourvu un manchon réducteur de section (9) fixé sur l'embout de raccordement de grand diamètre (10).

9. Enceinte de lavage selon l'une quelconque des revendications 1 à 8, **caractérisée par le fait qu'**elle est pourvue d'un purgeur (5) positionné en partie supérieure de l'enceinte (2).

10. Enceinte de lavage selon l'une quelconque des revendications 1 à 9, **caractérisée par le fait que** ledit élément mobile (8) est une pièce en matière plastique moulée, dont l'organe déflecteur (6) forme partie intégrante.

## Claims

1. A chamber for washing the drain spout of a milk storage and cooling tank, this spout (1) being equipped on the side of the tank (C), with a valve (V) and having at its free end, a connection endpiece (10) capable of being connected to a hose for pumping milk, this chamber (2) comprising a fixed member (3; 7) permanently mountable on the spout (1) between the valve (V) and the connection endpiece (10), and a mobile member (4; 8) in the shape of a shell having an inner cavity (CI) and an orifice (42; 84), this mobile member being adapted so as to be urged against and connected to the fixed member (3; 7) at its orifice (42; 84), so that its inner cavity surrounds the connection endpiece (10), while providing around the latter sufficient space for allowing a washing or rinsing liquid to pass and circulate through it, this chamber being further provided with an outlet duct for this liquid (30; 800), **characterized by** the fact that the wall of this cavity is interiorely provided, in the extension of the axis of the spout (1) or approximately in the extension of this axis, with a protrusion which forms a diverting member (6) capable of radially diverting outwards the flow of washing or rinsing liquid exiting the spout (1) so that it is homogeneously distributed inside the cavity (CI) of the shell-shaped mobile member (4; 8) all around said connection endpiece (10).

2. The washing chamber according to claim 1, **characterized by** the fact that said diverting member (6) has a variable cross-section which decreases in the direction of the spout (1).

3. The washing chamber according to claim 1 or 2, **characterized by** the fact that the diverting member (6) is a part having a symmetry of revolution around an axis parallel to the axis of the spout (1), or coinciding with this axis.

4. The washing chamber according to any of claims 1 to 3, **characterized by** the fact that said diverting member (6) has a conical or substantially conical shape -

5. The washing chamber according to any of claims 1 to 4, **characterized by** the fact that said mobile element (4; 8) in the shape of a shell has a flat bottom (40; 82) which is inscribed in a perpendicular plane, or substantially perpendicular to the axis of the spout (1) and that said diverting member (6) is borne by this flat bottom (40; 82).

6. The washing chamber according to any of claims 1 to 5, **characterized by** the fact that the diverting member (6) forms an integral part of said mobile member (4; 8).

7. The washing chamber according to any of claims 1 to 6, **characterized by** the fact that said mobile element (8) in the shape of a shell has a staged profile and has a wall recess (81), the bottom of which (82) is provided with said diverting member (6).

8. The washing chamber according to claim 7, adaptable on a spout (1) provided with a connection endpiece (10) of given diameter, a so-called "large diameter", **characterized by** the fact that said mobile member (8) in the shape of a shell and with a staged profile is then conformed and dimensioned so that it may be adapted onto a connection endpiece (92) of smaller diameter, with which a section reducing sleeve (9) is provided, attached on the connection endpiece of large diameter (10).

9. The washing chamber according to any of claims 1 to 9, **characterized by** the fact that it is provided with a purging device (5) positioned in the upper portion of the chamber (2).

10. The washing chamber according to any of claims 1 to 9, **characterized by** the fact that said mobile member (8) is a part in molded plastic material, the diverting member (6) of which is an integral part thereof.

## Patentansprüche

1. Kammer zum Waschen des Ablassstutzens eines Behälters zur Lagerung und Kühlung von Milch, wobei dieser Stutzen (1) auf der Seite des Behälters (C) mit einem Schieber (V) ausgestattet ist und an seinem freien Ende ein Anschlussstück (10) aufweist, das dafür eingerichtet ist, an einen Schlauch zum Abpumpen der Milch angeschlossen zu werden, wobei die Kammer (2) Folgendes umfasst: ein feststehendes Element (3; 7), das auf dem Stutzen (1) zwischen dem Schieber (V) und dem Anschlussstück (10) dauerhaft montierbar ist, und ein bewegliches Element (4; 8) in Schalenform, das eine innere Aushöhlung (CI) und eine Öffnung (42; 84) hat, wobei dieses bewegliche Element dafür eingerichtet ist, im Bereich seiner Öffnung (42; 84) mit dem feststehenden Element (3; 7) derart zusammengefügt und fest verbunden zu werden, dass seine innere Aushöhlung das Anschlussstück (10) umgibt und dabei rund um letzteres einen Freiraum schafft, der ausreicht, um den Durchgang und die Zirkulation einer Flüssigkeit zum Waschen oder Spülen zu gestatten, wobei die Kammer außerdem mit einer Austrittsleitung für diese Flüssigkeit (30; 600) ausgestattet ist, **dadurch gekennzeichnet, dass** die Wand dieser Aushöhlung innen, in Verlängerung der Achse des Stutzens (1) oder in etwa in Verlängerung dieser Achse, mit einem Vorsprung versehen ist, der ein Ablenkelement (6) bildet, das dafür eingerichtet ist, den aus dem Stutzen (1) austretenden Strom der Flüssigkeit zum Waschen oder Spülen radial nach außen abzulenken, damit er sich gleichmäßig im Inneren der Aushöhlung (Cl) des beweglichen Elements (4; 8) in Schalenform und rund um das Anschlussstück (10) verteilt.

2. Kammer zum Waschen nach Anspruch 1, **dadurch gekennzeichnet, dass** das Ablenkelement (6) einen veränderlichen Querschnitt hat, der in Richtung des Stutzens (1) abnimmt.

3. Kammer zum Waschen nach Anspruch 1 oder 2, **dadurch gekennzeichnet, dass** das Ablenkelement (6) ein Teil mit einer Rotationssymmetrie um eine Achse ist, die parallel zur Achse des Stutzens (1) ist oder mit dieser Achse zusammenfällt,

4. Kammer zum Waschen nach einem der Ansprüche 1 bis 3, **dadurch gekennzeichnet, dass** das Ablenkelement (8) eine konische oder im Wesentlichen konische Form hat.

5. Kammer zum Waschen nach einem der Ansprüche 1 bis 4, **dadurch gekennzeichnet, dass** das bewegliche Element (4; 8) in Schalenform einen flachen Boden (40; 82) hat, der in einer Ebene liegt, die senkrecht oder im Wesentlichen senkrecht zur Achse des Stutzens (1) ist, und dass das Ablenkelement (6) von diesem flachen Boden (40; 82) gehalten wird.

6. Kammer zum Waschen nach einem der Ansprüche 1 bis 5, **dadurch gekennzeichnet, dass** das Ablenkelement (6) einen integralen Bestandteil des beweglichen Elements (4; 8) bildet.

7. Kammer zum Waschen nach einem der Ansprüche 1 bis 6, **dadurch gekennzeichnet, dass** das bewegliche Element (8) in Schalenform ein gestuftes Profil hat und eine Vertiefung der Wand (81) aufweist, deren Boden (82) mit dem Ablenkelement (6) ausgestattet ist.

8. Kammer zum Waschen nach Anspruch 7, die zu einem Stutzen (1) passt, der mit einem Anschlussstück (10) mit gegebenem Durchmesser, der als "großer Durchmesser" bezeichnet wird, ausgestattet ist, **dadurch gekennzeichnet, dass** das bewegliche Element (8) in Schalenform und mit gestuftem Profil so ausgebildet und bemessen ist, dass es auch zu einem Anschlussstück (92) mit kleinerem Durchmesser passt, mit dem eine Muffe zur Querschnittsverringerung (9) versehen ist, die am Anschlussstück mit großem Durchmesser (10) befestigt ist.

9. Kammer zum Waschen nach einem der Ansprüche 1 bis 8, **dadurch gekennzeichnet, dass** sie mit einem Entlüftungshahn (5) versehen ist, der im oberen Teil der Kammer (2) angeordnet ist.

10. Kammer zum Waschen nach einem der Ansprüche 1 bis 9, **dadurch gekennzeichnet, dass** bewegliche Element (8) ein Teil aus geformtem Kunststoff ist, von dem das Ablenkelement (6) einen integralen Teil bildet.
